# DEMANDE DE BREVET EUROPEEN

(11) **EP 0 863 559 A1**
(43) Date de publication de la demande: **09.09.1998**
(21) Numéro de dépôt: 98200393.1
(22) Date de dépôt: 09.02.1998
(51) Int. Cl.: H01M 2/34, H01M 10/04

(54) **"Dispositif du type accumulateur plat comprenant une cellule electrochimique et des moyens de contact electrique"**

(30) Priorité: 18.02.1997 FR 9701883
(71) Demandeur: Koninklijke Philips Electronics N.V., 5621 BA Eindhoven (NL)
(72) Inventeur: Van Lerberghe, Steven, 75008 Paris (FR)
(74) Mandataire: Lottin, Claudine

(57) **Abrégé**

Dispositif du type accumulateur plat (10) incluant une cellule électrochimique plane avec au moins deux électrodes planes (2,2') de polarités opposées disposées de part et d'autre d'un matériau électrolyte (3,4), un boîtier planaire ayant des parties planaires (1,1') et enserrant ladite cellule électrochimique plane, et des moyens de contact électrique (30,30') des électrodes formant des bornes électriques externes fixées de manière étanche aux parties planaires du boîtier.Dans ce dispositif, l'accumulateur plat comprend un arrangement de sécurité (31,32 ; 31',32') formant coupe-circuit déclenchable par un court-circuit produit entre les bornes électriques du boîtier.

Application : Accumulateurs rechargeables pour téléphones mobiles.

## Description

L'invention concerne un dispositif du type accumulateur plat incluant une cellule électrochimique plane avec au moins deux électrodes planes de polarités opposées disposées de part et d'autre d'un matériau électrolyte, un boîtier planaire ayant des parties planaires et enserrant ladite cellule électrochimique plane, et des moyens de contact électrique des électrodes formant des bornes électriques externes fixées de manière étanche aux parties planaires du boîtier.

L'invention trouve son application dans l'industrie des piles électriques ou batteries rechargeables appliquée à l'utilisation dans des appareils portables tels que des terminaux téléphoniques.

Un dispositif du type accumulateur plat et mince ayant une cellule électrochimique, un boîtier et des moyens de contact formant des bornes externes, est déjà connu de la demande de brevet japonais JP-62-216151 (MATSUSHITA ELECTRIC IND. CO. LTD, MINORU YOSHINAKA). Le boîtier connu comprend deux parois planes inférieure et supérieure (1,1') en un matériau non conducteur (résine polycarbonate) séparées par un corps plastique (7, 8, 9) enserrant une cellule électrochimique. Cette cellule électrochimique comprend des électrodes (2,2') en plomb appliquées contre les parois planes inférieure et supérieure du boîtier. Une valve de sécurité 9, disposée à travers le corps du boitier permet de diminuer une occasionnelle surpression interne de cette cellule électrochimique au plomb. Les parois planes supérieure et inférieure comprennent chacune un collecteur de courant en forme de bouchon plat (3,3') en cuivre, traversant ladite paroi pour assurer un contact électrique entre les électrodes (2,2') et l'extérieur du boîtier. Un point est que l'étanchéité de ces bouchons est réalisée en chauffant et en fondant les parois planes (2,2'), les bouchons (3,3') et les électrodes (2,2') ensemble, pour assurer une cohésion de ces parties. Un autre point est que les électrodes (2,2') sont en outre rendues solidaires du corps de boîtier (7,8,9) par chauffage. Les bouchons (3,3') sont utilisés comme contacts externes positif et négatif du boîtier. Ces bouchons sont dépourvus de protubérance afin que le boîtier de l'accumulateur soit du type mince et planaire.

Un problème technique est lié aux cellules électrochimiques appelées batteries chimiques rechargeables. Certaines batteries telles que les batteries plomb-acide sont dès l'origine sous une pression supérieure à la pression atmosphérique pour assurer leur fonctionnement. Dans le cas de telles batteries, une surpression occasionnelle petit survenir durant l'opération de recharge. D'autres batteries chimiques rechargeables, bien que ne travaillant pas en état de surpression, peuvent néanmoins être soumises occasionnellement à un phénomène de surpression. Un tel phénomène peut survenir par exemple du fait d'un branchement défectueux de la batterie durant l'opération de recharge. Le branchement défectueux peut provoquer un court-circuit qui engendre un rapide dégagement de gaz dû à une réaction chimique intempestive entre les divers éléments de la cellule, et qui résulte en une surpression dans le boitier accompagnée d'une rapide montée en température. Cette réaction peut alors résulter en une explosion due à la surpression, avec fusion des matériaux due à la montée en température.

Dans le dispositif connu, le problème des surpressions est pris en compte et résolu par un évent en forme de tuyau disposé à travers le corps 7, 8, 9 du boîtier. Cet évent permet l'éjection d'un petit bouchon placé à l'extrémité externe du tuyau pour diminuer la pression à l'intérieur du boîtier et éviter l'explosion du dispositif.

Un autre problème technique est qu'il ne peut se trouver à l'intérieur d'une cellule électrochimique d'assemblage de parties métalliques de métaux différents, soudées ou en contact, et baignant dans l'électrolyte. Ce genre d'assemblage doit absolument se trouver hors du milieu chimique formé par l'électrolyte.

Dans le dispositif connu, ce problème est pris en compte et résolu du fait que les électrodes en plomb sont soudées sur toute la surface interne des parois planes du boîtier et sont soudées en outre, à leur périphérie, entre le corps et les parois planes du boîtier, afin que la soudure plomb-cuivre de ces électrodes avec les bouchons servant de contacts externes ne baigne pas dans l'électrolyte.

Un but de la présente invention est de fournir un dispositif un type précité dont la sécurité, en cas de branchement défectueux ou d'usage abusif, soit améliorée.

Ce but est atteint au moyen d'un dispositif du type décrit en préambule, comprenant un arrangement de sécurité formant coupe-circuit déclenchable par un court-circuit produit entre les bornes électriques du boîtier.

Un avantage du dispositif selon l'invention est qu'il présente un système de sécurité supplémentaire par rapport au dispositif connu, qui agit sur un danger fréquent qui n'était pas pris en compte jusqu'à présent, c'est-à-dire le court-circuit.

Dans une mise en oeuvre du dispositif selon l'invention le boîtier comprend deux plaques opposées planes parallèles et à proximité chacune d'une des électrodes appelée correspondante, ces plaques étant isolées électriquement de ces électrodes et reliées entre elles de façon étanche, et chaque plaque du boîtier est munie d'une ouverture fermée de façon étanche par une pièce conductrice appelée bouton-pression formant collecteur de courant par contact par pression sur l'électrode correspondante et formant une desdites bornes électriques externes du boîtier, ledit bouton-pression assurant la fonction coupe-circuit par rupture du contact avec l'électrode correspondante lorsqu'une surpression se produit dans le boîtier étanche, due à un court-circuit engendrant une réaction chimique dans la cellule électrochimique et un gonflement du boîtier avec déformation des plaques.

Un avantage du dispositif selon l'invention est que lorsqu'un court-circuit se produit entre les contacts électriques du dispositif résultant en une surpression dans le boîtier, alors les boutons-pression qui ne sont pas assujettis aux électrodes correspondantes s'écartent desdites électrodes sous l'effet de la surpression qui bombe les faces opposées du boîtier et donc le circuit est coupé.

Un autre avantage du dispositif selon l'invention est que si une surpression se produit quelle qu'en soit la cause, et si la surpression est très grande, alors les faces opposées du boîtier sont très déformées d'où ils résultent que les boutons-pression sont désolidarisés desdites faces et qu'un évent se forme, évitant une explosion.

Un avantage du dispositif selon l'invention est que les boutons-pression ont à la fois, outre leur fonction première de collecteur de courant, une fonction de coupe-circuit et une fonction d'évent. Donc un tuyau traversant le corps du boitier comme connu précédemment, est évité. D'où il résulte que le boîtier planaire peut être aminci vis-à-vis du boîtier connu. Ce dernier avantage est particulièrement important à ce jour car le concepteur de batterie cherche à construire des accumulateurs rechargeables qui sont de plus en plus minces pour être utilisés dans des appareils mobiles ou portables de plus en plus petits. Les dimensions idéales actuellement envisagées pour un accumulateur sont celles d'une carte de paiement.

Dans une mise en oeuvre de ce dispositif, chaque bouton-pression comprend une première partie appelée partie interne qui est fixée de façon étanche à la plaque du boîtier correspondante, qui est en contact électrique par pression sur l'électrode correspondante, qui n'est pas assujetti à ladite électrode correspondante et qui est en un premier matériau conducteur sans réaction chimique avec les matériaux de ladite électrode et de l'électrolyte, et dans lequel chaque bouton-pression comprend une seconde partie appelée partie externe qui est sans contact avec la cellule électrochimique, et en contact électrique avec la partie interne du bouton-pression et qui est en un second matériau conducteur différent et approprié à former une borne externe de contact de l'accumulateur.

Un autre avantage du dispositif est qu'une jonction étanche entre le métal d'électrode et un autre métal peut être réalisée de façon très simple.

L'invention est décrite ci-après en référence aux figures schématiques annexées, dont la liste est la suivante :
- la FIG. 1A représente un dispositif accumulateur plat, en perspective ;
- la FIG.1B représente en coupe transversale le dispositif accumulateur plat de la FIG 1A ;
- les FIGS.2A, 2B représentent en coupe une ouverture dans une plaque du boîtier de cet accumulateur plat pour recevoir une borne électrique ;
- la FIG.3 représente en coupe des pièces pour former une telle borne ;
- les FIGS.4A à 4C représentent des exemples de montages de bornes électriques dans des ouvertures ;
- les FIGS.5A, 5B illustrent les fonctions d'une borne en cas de surpression dans le boitier de l'accumulateur.

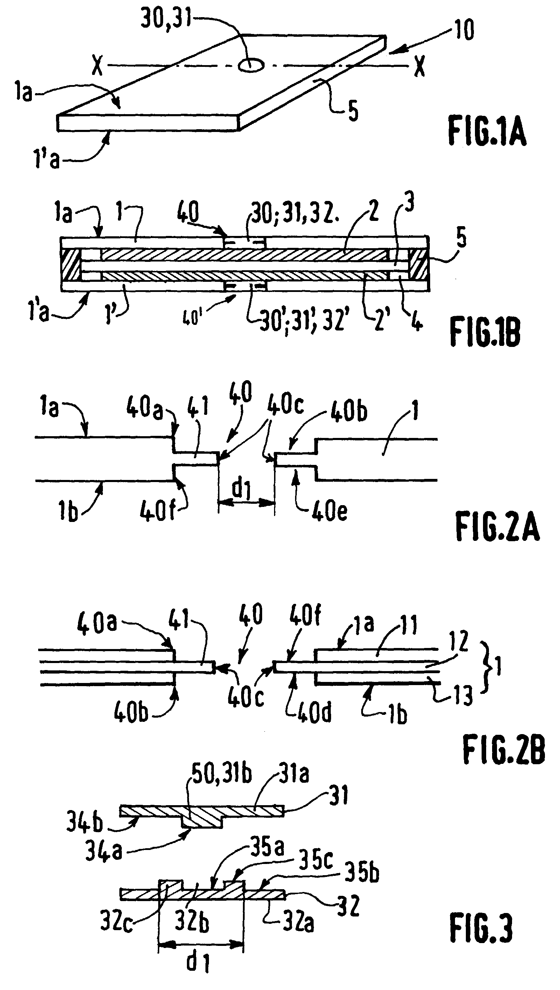

La FIG.1A représente schématiquement en perspective un dispositif du type accumulateur 10. Cet accumulateur 10 inclut une cellule électrochimique plane 2,2', 3,4 et un boîtier planaire 1,1', 5, 30,30' enserrant ladite cellule électrochimique plane. La FIG.1B représente ce dispositif accumulateur plan en coupe simplifiée selon l'axe XX' de la FIG.1A.

La cellule électrochimique plane comprend au moins deux électrodes de polarités opposées, notées 2 et 2', un élément séparateur 3, s'étendant au-delà des bords des électrodes 2 et 2' pour éviter les courts-circuits internes, et imprégné d'un électrolyte 4. La cellule électrochimique est de préférence d'un type rechargeable, par exemple du type plomb-acide connu de l'homme du métier.

Le boitier comprend deux plaques opposées 1 et 1' planes, chacune parallèle et à proximité d'une des électrodes 2,2' de polarités opposées de la cellule électrochimique. Ces plaques 1 et 1' sont en un matériau isolant, ou bien en un matériau conducteur muni d'un revêtement isolant. Ces plaques sont reliées entre elles de façon étanche par un cordon 5 de matériau de scellement isolant, ou bien par un corps 5, scellé à la périphérie de chacune des plaques 1,1'. Un évent, du type connu de l'état de la technique, n'est pas utile.

Le boîtier planaire 1, 1', 5 peut être de toute forme et dimension. A ce jour, on préfère les boîtiers ayant substantiellement les formes et dimensions des cartes de paiement, c'est-à-dire rectangulaire et de faible épaisseur. Néanmoins, le boîtier et la cellule électrochimique plane qu'il contient peuvent avoir beaucoup d'autres formes, telles que rondes ou complexes.

L'accumulateur plat inclut des moyens 30 de contact électrique des électrodes 2,2', formant des bornes électriques externes de polarités opposées disponibles respectivement sur chaque plaque 1,1' du boîtier. A cet effet, chaque face comprend une ouverture 40,40' respectivement. On décrit ci-après l'ouverture 40 dans la plaque 1. L'ouverture 40' dans la plaque 1' est faite symétriquement.

En référence à la FIG.2A, l'ouverture 40 comprend une ouverture centrale 40c délimitée par une collerette 41. La collerette 41 est réalisée en effectuant des épaulements 40b, 40f à partir de chaque face 1a, 1b de la plaque 1. Les épaulements déterminent des ouvertures périphériques 40a, 40b qui sont de préférence, mais non exclusivement, égales.

En référence à la FIG. 2B, le matériau formant la plaque 1 (ou 1') est multicouche 11,12,13. Une couche 12 située entre les couches 11 et 13 déborde ces couches vers le centre de l'ouverture 40, pour former la collerette 41. La couche intermédiaire 12 peut être par exemple métallique, alors que les couches 11 et 13 sont isolantes -ou bien, toutes les couches peuvent être isolantes-.

L'ouverture 40 est fermée de façon étanche par le bouchon conducteur 30 formant contact électrique avec l'électrode 2 et formant borne de contact externe du boîtier de l'accumulateur 10.

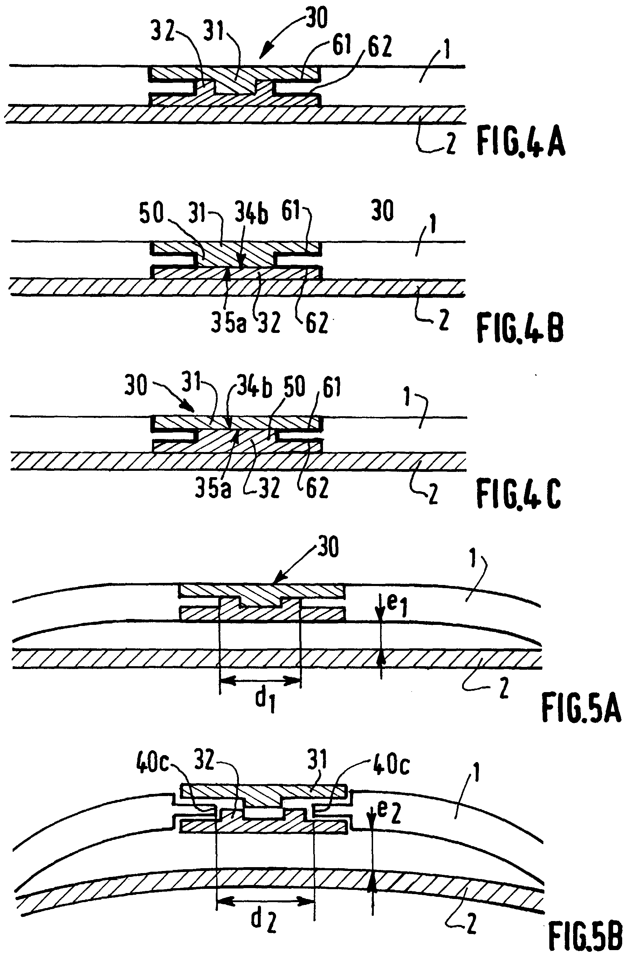

En référence aux FIG.3 et 4A à 4C, le bouton 30 comprend deux parties 31,32. Une première partie 32 appelée partie interne est en contact électrique avec l'électrode 2 du fait qu'en fonctionnement, une cellule électrochimique est toujours sous une pression suffisante pour obtenir que les électrodes terminales telles que 2 et 2' soient plaquées entre les plaques 1,1' du boitier. Une seconde partie 31 appelée partie externe forme la borne électrique externe du boîtier correspondant à la polarité de l'électrode 2. La partie interne 32 est en un matériau appelé en chimie compatible avec le matériau de l'électrode 2 avec laquelle cette partie 32 est en contact électrique. Par compatible, on entend tout matériau qui ne provoque pas de réaction chimique lorsqu'il est en contact ou à proximité du matériau d'électrode et baignant dans le matériau électrolyte. Par exemple la partie interne 32 est réalisée dans le même matériau que l'électrode 2.

La partie externe 31 est de préférence en un matériau conducteur de faible résistance électrique et peu oxydable, de façon à réaliser la fonction collecteur de courant, et à former un bon contact électrique. Selon l'invention les parties interne et externe 32,31 sont assemblées pour procurer une connexion électrique de bonne qualité entre deux matériaux conducteurs différents, et ceci sans baigner dans le matériau électrolytique.

En référence aux FIGS.3 et 4A, le bouchon conducteur 30 est appelé ci-après bouton-pression. Chaque partie 31 et 32 comporte une partie plane 31a et 32b respectivement, avec des faces 34b et 35b respectivement qui sont appuyées et fixées par collage ou soudure ou tout autre moyen de fixation 61,62 sur les faces 40f, 40d de la collerette 41. Et au moins une des parties 31 ou bien 32 comporte une quille 50 pour contacter l'autre partie respectivement 32 ou bien 31 à travers l'ouverture 40c de la collerette 41.

La quille 50 peut établir le contact entre les pièces 31, 32 de différentes manières citées à titre d'exemple. En référence aux FIG.3 et 4A, la quille 50 est appliquée à la pièce 31 et est référencée 31b. Dans ce cas, la pièce 32 comporte un épaulement 32c de la forme et dimension de l'ouverture interne 40c de la collerette. La pièce 32 comporte en outre un creux 30b approprié à encastrer la quille 31b. Par fixation des pièces 31,32 pour obtenir l'obturation étanche de l'ouverture 40 de la plaque 1, la surface 34a est en contact avec la surface 35a, et la surface 35c est en contact avec la surface 34b. La quille 31b est bloquée dans le creux 32b et les pièces 31, 32 sont assujetties à la plaque 1 de part et d'autre des parties de collerette 40f, 40d avec des moyens de fixation 61, 62 déjà cités.

Un montage symétrique 30' est fait pour obturer l'ouverture 40' de la plaque 1' et réaliser la même fonction que le bouton-pression 30.

En référence à la FIG.4B selon une variante simplifiée du bouton-pression de la FIG.4A, la pièce 31 comporte une quille 50 qui a une surface 34b pour venir contacter la surface 35a de la pièce 32 sur la totalité de l'ouverture 40c de la collerette 41. Les pièces 31, 32 sont en outre assujetties à la collerette 41 par les moyens de fixation 61, 62 comme déjà décrit.

En référence à la FIG.4C, les particularités des pièces 31, 32 de la FIG.4B sont interverties.

En référence à la FIG.5A si, par une erreur de connexion, lors d'une opération de charge ou de recharge de l'élément accumulateur 10, les polarités des bornes 30,30' sont interverties, il en résulte un court-circuit qui, comme exposé dans la partie introductive, engendre une réaction chimique intempestive et l'apparition d'une surpression dans le boîtier. Dans ce cas, les plaques 1,1' bien que substantiellement rigides, deviennent courbées vers l'extérieur du boitier : le boîtier devient bombé. Les plaques 1 et 1' et les bouchons 30,30' collecteurs de courant deviennent alors séparés des électrodes 2,2' par une petite distance e1 qui est suffisante à réaliser la fonction coupe-circuit. Cela est possible du fait que les électrodes 2, 2' ne sont assujetties ni aux plaques 1,1', ni aux parties 32, 32' des bouchons 30,30' collecteurs de courant.

En référence à la FIG.5B, si la surpression devient brusquement très grande, par exemple plus grande que dans le cas illustré par la FIG.5A, alors les plaques 1,1' deviennent encore plus bombées et la distance e2 qui sépare les plaques 1,1' des électrodes 2,2' devient plus grande que la petite distance e1. Non seulement les électrodes 2,2' sont déconnectées des bouchons 30,30' collecteurs de courant, mais en outre la dimension de l'ouverture 40c de collerette qui est normalement d1, s'agrandit selon d2 > d1. Dans ce cas, les moyens de fixation 61, 62 du bouchon 30,30' dans l'ouverture 40,40' des plaques 1,1' deviennent des points faibles, d'où il résulte que les parties 31,32 du bouchon 30 (ou respectivement 30') se désolidarisent des plaques 1,1', créant un évent qui fait baisser la pression dans le boîtier en évitant une occasionnelle explosion.

Les bouchons 30,30' formés des pièces 31,32 (et respectivement 31',32') ont donc pour fonctions d'être :
- des collecteurs de courant en matériau compatible avec les électrodes du côté électrode,
- des bornes de contact externes du boîtier, en matériau peu oxydable et peu résistant,
- des coupe-circuits par déconnexion facile des électrodes,
- des évents par désolidarisation vis-à-vis des plaques du boîtier, en cas de surpression dangereuse.

## Revendications

1. Dispositif du type accumulateur plat (10) incluant une cellule électrochimique plane avec au moins deux électrodes planes (2,2') de polarités opposées disposées de part et d'autre d'un matériau électrolyte (3,4), un boîtier planaire ayant des parties planaires (1,1') et enserrant ladite cellule électrochimique plane, et des moyens de contact électrique (30,30') des électrodes formant des bornes électriques externes fixées de manière étanche aux parties planaires du boîtier,
dispositif dans lequel l'accumulateur plat comprend un arrangement de sécurité (31,32 ; 31',32') formant coupe-circuit déclenchable par un court-circuit produit entre les bornes électriques du boîtier.

2. Dispositif selon la revendication 1, dans lequel les parties planaires du boitier comprennent deux plaques opposées planes parallèles (1,1') et à proximité chacune d'une des électrodes (2,2') appelée correspondante, ces plaques étant isolées électriquement de ces èlectrodes et reliées entre elles de façon étanche,
dispositif dans lequel, chaque plaque du boîtier est munie d'une ouverture (40.40') fermée de façon étanche par une pièce conductrice (30,30') appelée bouton-pression formant collecteur de courant (32,32') par contact par pression sur l'électrode correspondante (2,2') et formant une desdites bornes électriques externes (31,31') du boîtier, ledit bouton-pression assurant la fonction coupe-circuit par rupture du contact avec l'électrode correspondante (2,2') lorsqu'une surpression se produit dans le boîtier étanche, due à un court-circuit engendrant une réaction chimique dans la cellule électrochimique et un gonflement du boîtier avec déformation des plaques.

3. Dispositif selon la revendication 2, dans lequel, chaque bouton-pression comprend une première partie appelée partie interne (32,32') qui est fixée de façon étanche à la plaque (2,2') du boîtier correspondante, qui est en contact électrique par pression sur l'électrode correspondante, qui n'est pas assujetti à ladite électrode correspondante et qui est en un premier matériau conducteur sans réaction chimique avec les matériaux de ladite électrode et de l'électrolyte, et dans lequel chaque bouton-pression comprend une seconde partie (31,31') appelée partie externe qui est sans contact avec la cellule électrochimique, et en contact électrique avec la partie interne (32,32') du bouton-pression et qui est en un second matériau conducteur différent et approprié à former une borne externe de contact de l'accumulateur.

4. Dispositif selon la revendication 3, dans lequel les plaques opposées (1,1') du boîtier sont reliées entre elles de façon étanche par un corps (5) de boîtier.

5. Dispositif selon l'une des revendications 3 ou 4, dans lequel l'une des parties du bouton-pression, par exemple interne (32,32'), a une partie planaire (32a), et a un creux (32b) vers l'intérieur du bouton-pression, et l'autre partie du bouton-pression, par exemple respectivement externe, a une partie planaire (31a) et a une quille (50,31b) vers l'intérieur du bouton-pression et ladite quille (31b,31b') est encastrée dans ledit creux (32b,32b').

6. Dispositif selon la revendication 5, dans lequel l,ouverture (40,40') dans chaque plaque du boîtier a une collerette (41,41') périphérique réalisée dans l'épaisseur de la plaque (1,1') correspondante, ladite collerette délimitant ladite ouverture (40c), et dans lequel les parties interne et externe du bouton-pression ont des parties planes (35b,34b) en regard qui sont disposées de part et d'autre de ladite collerette (41,41'), avec ladite quille (50 ; 31b,31b') encastrée dans ledit creux (32b,32b') par le moyen de ladite ouverture (40c,40c') de collerette et lesdites parties planes en regard du bouton-pression qui sont fixées de façon étanche (61,62 ; 61',62') aux parties de collerette correspondantes.

7. Dispositif selon l'une des revendications 1 à 6, dans lequel les plaques (1,1') sont en un matériau isolant.

8. Dispositif selon l'une des revendications 1 à 6, dans lequel les plaques (1,1') sont en un matériau plastique multicouches.

9. Dispositif selon l'une des revendications 1 à 6, dans lequel les plaques ( 1,1') sont en un matériau multicouches (11,12,13) incluant au moins une couche métallique (12) dans laquelle est formée la collerette et une couche isolante (13) au moins sur la face interne desdites plaques.

10. Dispositif selon l'une des revendications 1 à 9 dans lequel les moyens de contact électrique (30,30') des électrodes formant des bornes électriques externes du boîtier, appelés bouton-pression (31,32 ; 31',32'), assurent une sécurité anti-explosion en cas de surpression dangereuse dans le boîtier étanche, par rupture du scellement étanches entre lesdits boutons-pressions et les parties planaires du boîtier.
